# EUROPEAN PATENT APPLICATION

(11) **EP 4 773 344 A1**
(43) Date of publication of application: **08.07.2026**
(21) Application number: 25195193.5
(22) Date of filing: 11.08.2025
(51) Int. Cl.: H01M 10/647, H01M 50/209, H01M 50/271

(54) **BATTERY MODULE**

(30) Priority: 03.01.2025 KR 20250000999
(71) Applicant: SAMSUNG SDI CO., LTD., Yongin-si, Gyeonggi-do 17084 (KR)
(72) Inventor: KIM, Young Deok, Suwon-si, Gyeonggi-do 16678 (KR)
(74) Representative: Gulde & Partner

(57) **Abstract**

A battery module includes a housing including a cover plate having thermal conductivity, a plurality of secondary batteries accommodated in the housing and each including an electrode assembly, a case accommodating the electrode assembly, a cap plate which seals the case and faces the cover plate, and a pair of terminals installed on the cap plate, a plurality of busbars accommodated in the housing and configured to electrically connect the plurality of the secondary batteries, and a heat conductor between the cap plates of the plurality of the secondary batteries and the cover plate.

## Description

### BACKGROUND

### 1. Field

Aspects of embodiments of the present invention relate to a battery module.

### 2. Description of the Related Art

In general, with the rapid spread of electronic devices using batteries, such as mobile phones, notebook computers, and electric vehicles, the demand for secondary batteries with high energy density and high capacity has rapidly increased. Accordingly, research and development for improving the performance of lithium secondary batteries is being actively conducted.

A lithium secondary battery is a battery which includes a positive electrode and a negative electrode, each of which includes an active material capable of intercalating and deintercalating lithium ions, and an electrolyte, and in which electrical energy is produced through oxidation and reduction reactions when lithium ions are intercalated/deintercalated into/from the positive electrode and the negative electrode.

The aforementioned information disclosed in this background section is provided for enhancement of understanding of the background technology of the present disclosure, and therefore may contain information that does not constitute the related art.

### SUMMARY

According to an aspect of embodiments of the present invention, a battery module with improved heat dissipation performance and improved rigidity of a housing is provided.

The present invention is set out in the appended set of claims, wherein the drawings and respective description relate to advantageous embodiments thereof.

However, aspects and technical objectives to be achieved by the present disclosure are not limited to the above-described aspects and objectives, and other aspects and objectives, which are not described above, will be clearly understood by those skilled in the art through the following description of the disclosure.

According to one or more embodiments of the present invention, a battery module includes a housing including a cover plate having thermal conductivity, a plurality of secondary batteries accommodated in the housing and each including an electrode assembly, a case configured to accommodate the electrode assembly, a cap plate which seals the case and faces the cover plate, and a pair of terminals installed the cap plate, a plurality of busbars accommodated in the housing and configured to electrically connect the plurality of the secondary batteries, and a heat conductor between the cap plates of the plurality of the secondary batteries and the cover plate.

The heat conductor may include a thermal conductive adhesive which fills a space between the cap plate and the cover plate and is in contact with the cap plate, the terminal, the busbar, and the cover plate.

Each of the secondary batteries may further include a cell vent between the pair of terminals in the cap plate, and the cover plate may include cover vent holes corresponding to the cell vents.

In the battery module, a number of the terminals may be twice a number of the plurality of secondary batteries, a number of the cell vents may be equal to the number of the plurality of secondary batteries, and a number of the cover vent holes may be equal to the number of the plurality of secondary batteries.

The plurality of secondary batteries may be arranged in one column in a first direction, the plurality of terminals may be arranged along a pair of columns in the first direction at a first side and a second side of the battery module in a second direction orthogonal to the first direction, and the cell vents and the cover vent holes may each be arranged in one column in the first direction between the pair of columns of the plurality of terminals.

The cell vents and the cover vent holes may be located to overlap each other in a third direction orthogonal to each of the first direction and the second direction.

The cover plate may include a cell vent cover in which the cover vent holes are formed, and a pair of terminal covers which overlap the plurality of terminals in the third direction and are located to be spaced apart from each other with the cell vent cover therebetween.

The pair of terminal covers may be spaced further apart from the cap plate than the cell vent cover in the third direction.

The cover plate may further include vent guide protrusions each protruding from the cell vent cover to be in contact with a periphery of a cell vent of the cell vents.

The housing may further include a pair of end plates located to be spaced apart from each other in the first direction such that the plurality of the secondary batteries is arranged therebetween, and a pair of side plates coupled to the pair of end plates and located to be spaced apart from each other in the second direction such that the plurality of secondary batteries is arranged therebetween.

Each of the side plates may include a side shield portion extending in the first direction and having opposite end portions in the first direction coupled to the pair of end plates, and a cover coupling portion connected to a side of the side shield portion in the third direction and coupled to the cover plate, and the cover plate may further include a side coupling portion coupled to the cover coupling portion and located to be spaced further apart from the cell vent cover than the terminal cover in the second direction.

The cover coupling portion may include a side inclination surface which is welded to the side coupling portion and is inclined in a direction away from the cap plate in the third direction as a distance to the terminal is increased in the second direction.

The side coupling portion may include a first side inclination plate which is inclined in the direction away from the cap plate in the third direction as a distance to the terminal cover is increased in the second direction so as to be in surface contact with the side inclination surface, and a second side inclination plate which is located between the terminal cover and the first side inclination plate to connect the terminal cover to the first side inclination plate and which is inclined in a direction toward the cap plate in the third direction as the distance to the terminal cover is increased in the second direction.

The cover coupling portion may further include a side blocking wall including a side in contact with the cap plate in the third direction and another side in contact with the second side inclination plate and extending in the first direction.

The end plate may include an end shield portion of which opposite end portions in the second direction are coupled to the pair of side plates, and an end blocking wall protruding from the end shield portion in the third direction and coupled to the terminal cover.

### BRIEF DESCRIPTION OF THE DRAWINGS

The above and other aspects, objects, features, and advantages of the present disclosure will become more apparent to those of ordinary skill in the art by describing some embodiments thereof in further detail with reference to the accompanying drawings, in which:
FIG. 1 is a perspective view of a battery module according to an embodiment of the present disclosure;
FIG. 2 is an exploded perspective view of the battery module of FIG. 1;
FIG. 3 is a perspective view of a secondary battery of FIG. 2;
FIG. 4 is a cross-sectional view along the line S1-S1 of FIG. 1;
FIG. 5 is a schematic exploded perspective view illustrating a configuration of an electrode assembly of FIG. 4;
FIG. 6 is a perspective bottom portion view illustrating a cover plate of FIG. 2;
FIG. 7 is an enlarged view of a region "A" of FIG. 6;
FIG. 8 is an enlarged view of a region "B" of FIG. 4;
FIG. 9 is a cross-sectional view along the line S2-S2 of FIG. 4;
FIG. 10 is an enlarged view of a region "C" of FIG. 4;
FIG. 11 is an enlarged view of a region "D" of FIG. 1; and
FIG. 12 is a cross-sectional view along the line S3-S3 of FIG. 1.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

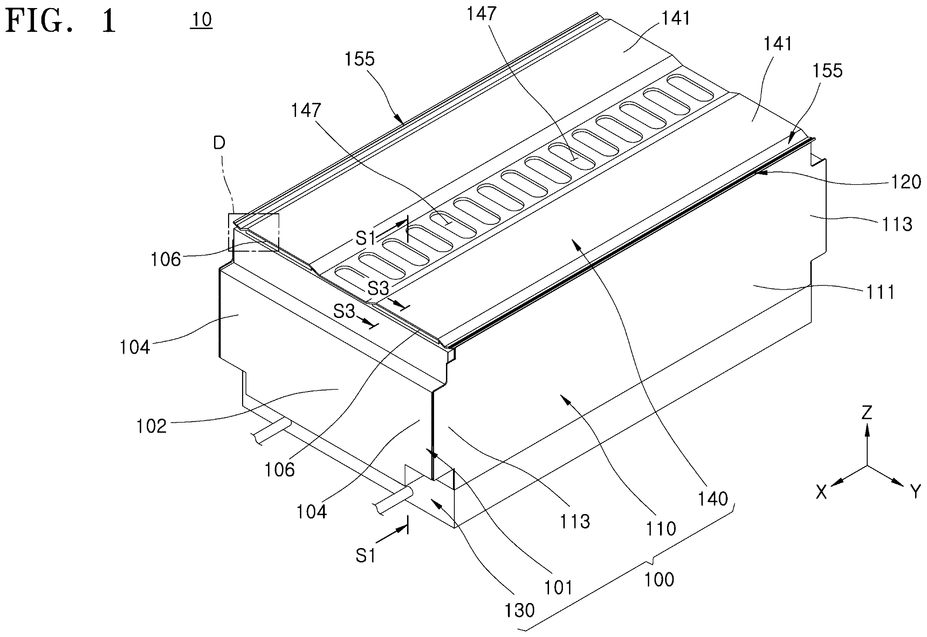

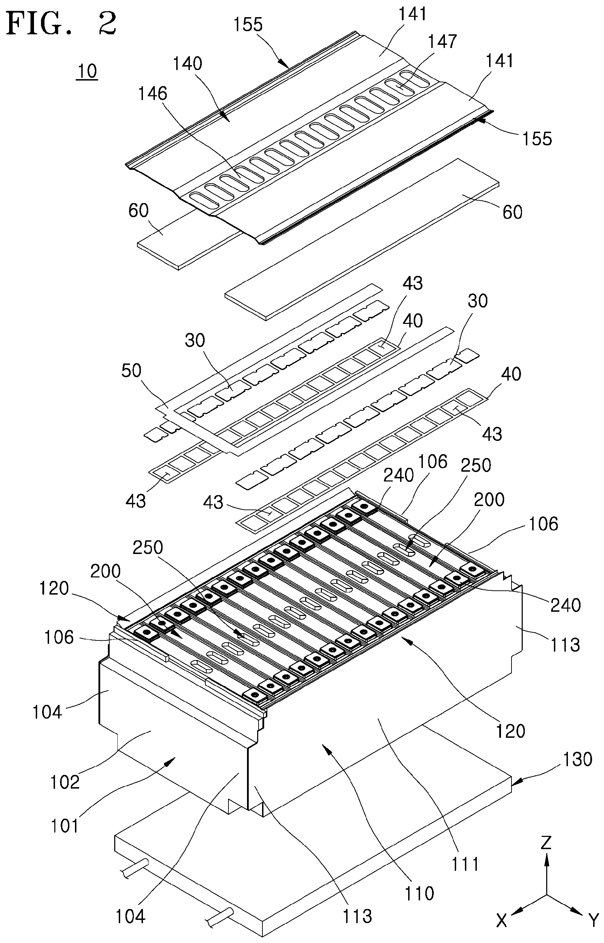

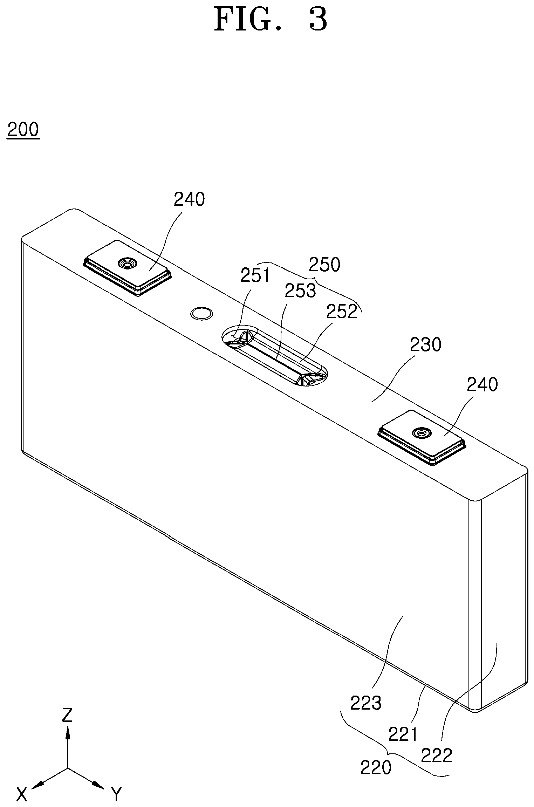

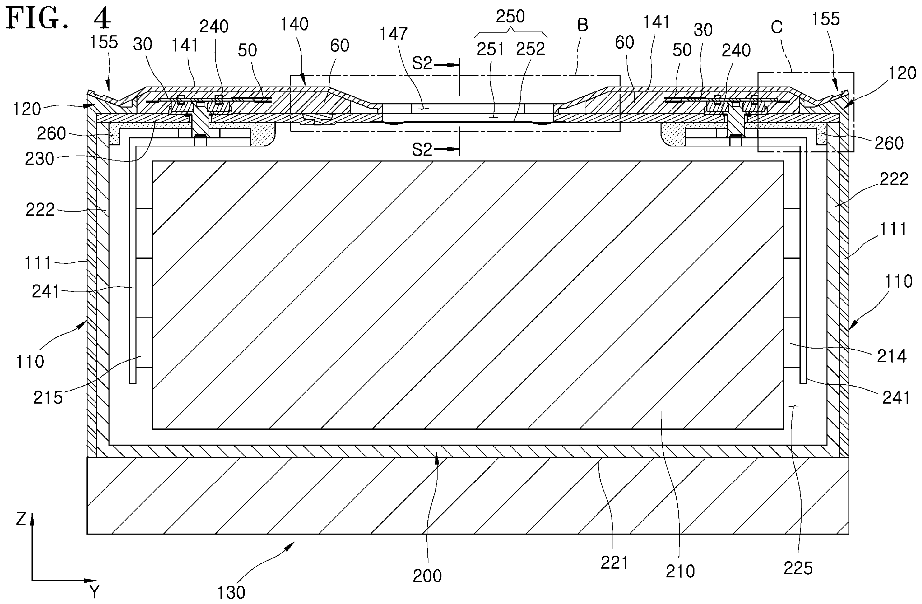

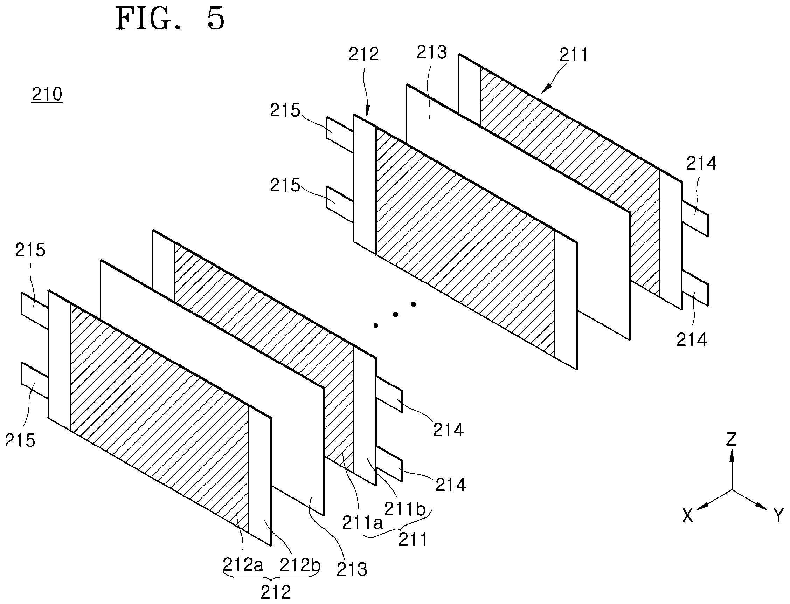

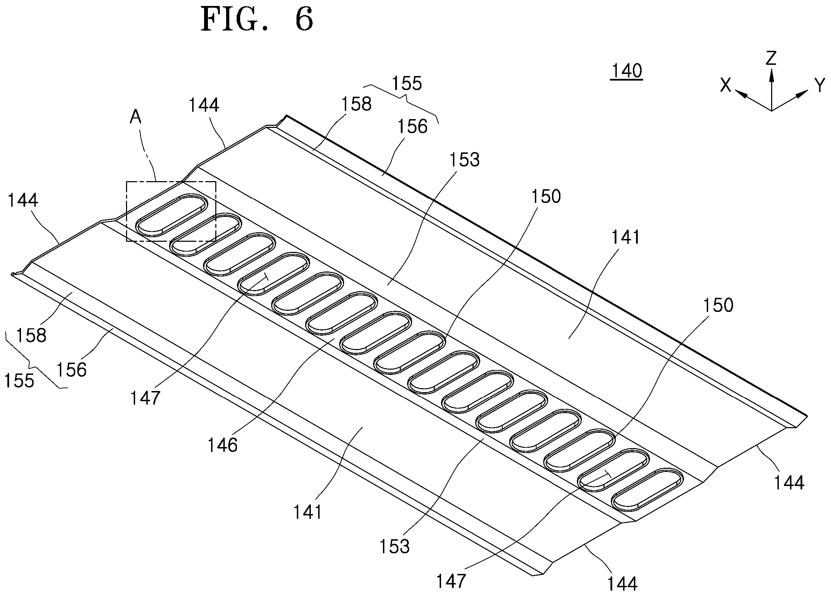

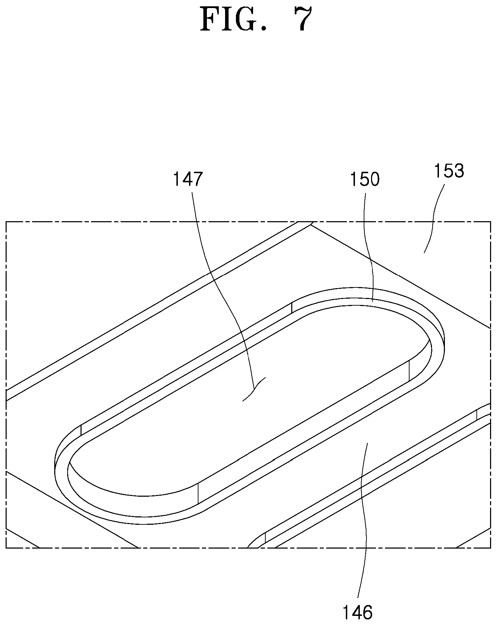

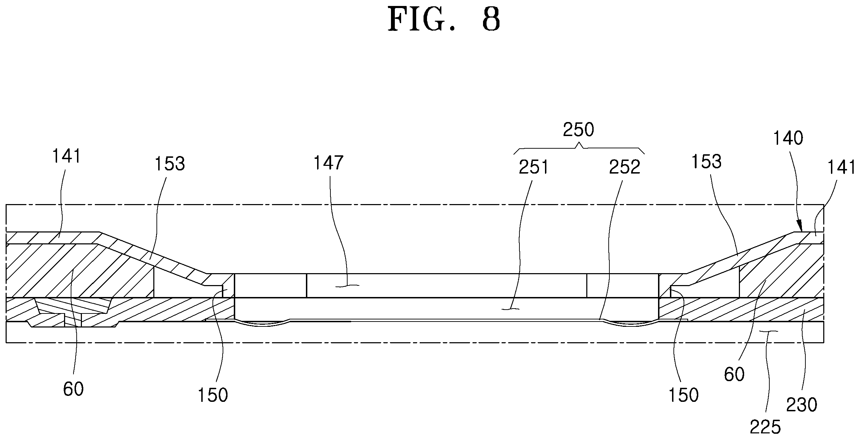

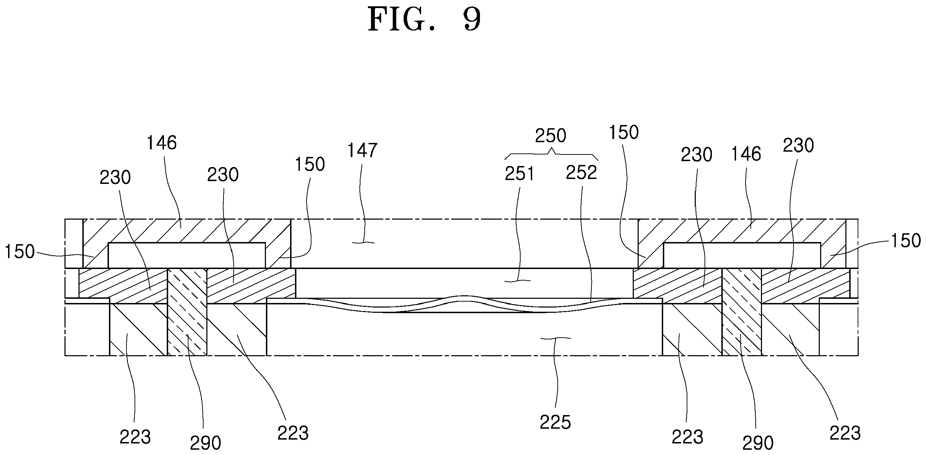

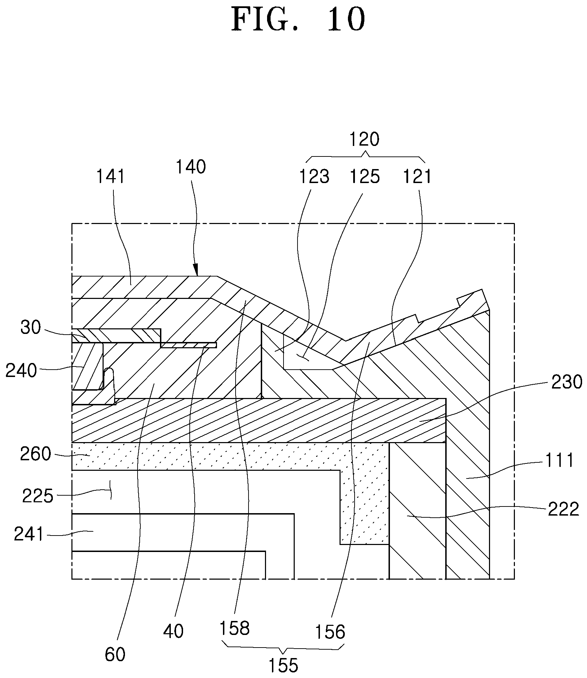

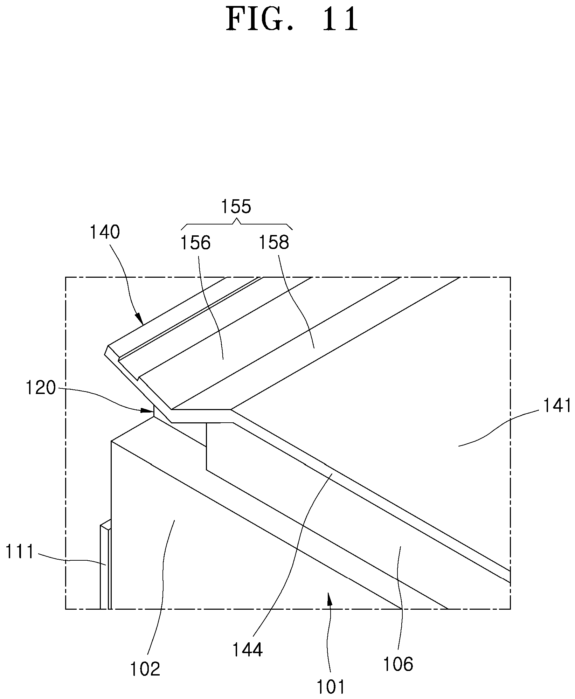

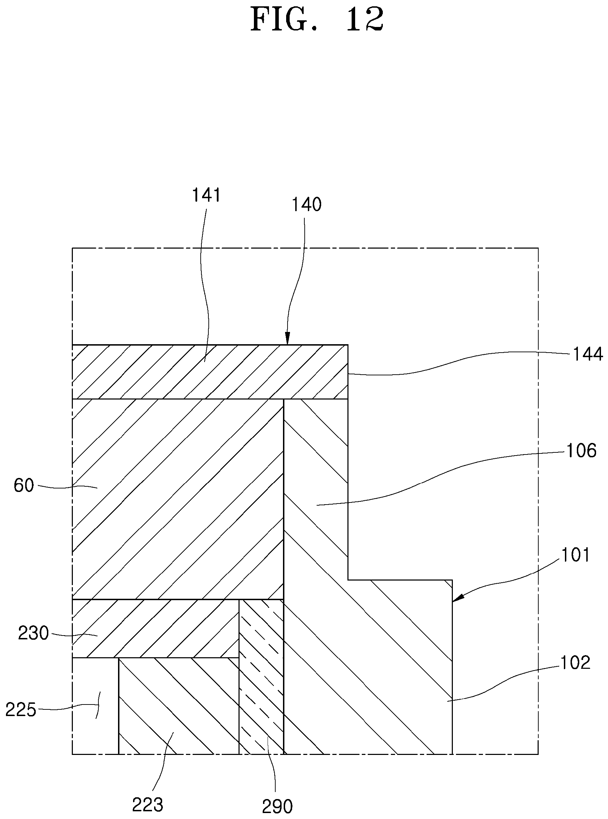

FIG. 1 is a perspective view of a battery module according to an embodiment of the present disclosure. FIG. 2 is an exploded perspective view of the battery module of FIG. 1. FIG. 3 is a perspective view of a secondary battery of FIG. 2. FIG. 4 is a cross-sectional view along the line S1-S1 of FIG. 1. FIG. 5 is a schematic exploded perspective view illustrating a configuration of an electrode assembly of FIG. 4. FIG. 6 is a perspective bottom portion view illustrating a cover plate of FIG. 2. FIG. 7 is an enlarged view of a region "A" of FIG. 6. FIG. 8 is an enlarged view of a region "B" of FIG. 4. FIG. 9 is a cross-sectional view along the line S2-S2 of FIG. 4. FIG. 10 is an enlarged view of a region "C" of FIG. 4. FIG. 11 is an enlarged view of a region "D" of FIG. 1. FIG. 12 is a cross-sectional view along the line S3-S3 of FIG. 1.

Referring to FIGS. 1 and 2, a battery module 10 according to the present invention includes a housing 100, a secondary battery 200, a plurality of busbars 30, and a heat conductor 60.

The housing 100 accommodates a plurality of the secondary batteries 200. The housing 100 may support the secondary batteries 200 and may protect the secondary batteries 200 from an external impact and foreign matter. The housing 100 includes a cover plate 140 having thermal conductivity. In an embodiment, the plurality of secondary batteries 200 may be arranged in one column in a first direction inside the housing 100.

The first direction may be parallel to a longitudinal direction of the battery module 10 and the cover plate 140. A second direction may be a direction orthogonal to the first direction and may be parallel to a width direction of the battery module 10 and the cover plate 140. A third direction may be a direction orthogonal to each of the first and second directions and may be parallel to a height direction of the battery module 10 and a thickness direction of the cover plate 140. As shown in FIGS. 1 to 6, the first direction may be a direction parallel to an X-axis, the second direction may be a direction parallel to a Y-axis, and the third direction may be a direction parallel to a Z-axis.

Referring to FIGS. 3 to 5, each of the secondary batteries 200 includes an electrode assembly 210, a case 220, a cap plate 230, a terminal 240, and a cell vent 250.

The electrode assembly 210 may function as a unit structure that performs operations of charging and discharging power in the secondary battery 200. The electrode assembly 210 may be accommodated inside the case 220. That is, the electrode assembly 210 may be accommodated in an internal space 225 of the case 220.

The electrode assembly 210 may include a first electrode 211, a second electrode 212, and a separator 213.

Herein, an example in which the electrode assembly 210 is formed as a stack type in which a plurality of first electrodes 211, a plurality of second electrodes 212, and a plurality of separators 213 are alternately stacked in the first direction will be described. However, the electrode assembly 210 is not limited thereto and may be formed as a jelly roll type in which the first electrodes 211, the second electrodes 212, and the separators 213 are wound around a winding axis in a state of being sequentially stacked.

In an embodiment, the first electrode 211 may function as a positive electrode of the electrode assembly 210.

The first electrode 211 according to an embodiment may be formed to have a form of a foil including a metal material, such as aluminum or an aluminum alloy. Both, or opposite, surfaces of the first electrode 211 may be disposed to be perpendicular to the first direction. A type, size, and shape of the first electrode 211 are not particularly limited as long as the first electrode 211 does not cause chemical changes in a secondary battery and is conductive. The shape of the first electrode 211 may have any of various shapes in addition to a rectangular shape.

The plurality of first electrodes 211 may be provided. The plurality of first electrodes 211 may be arranged in the first direction. A number of the first electrodes 211 may be varied according to a charge capacity or the like of the secondary battery 200.

The first electrode 211 may include a first active material layer 211a.

The first active material layer 211a may be provided in a form applied on at least a portion of the first electrode 211. The first active material layer 211a may be applied on both, or opposite, surfaces of the first electrode 211 or may be applied on only one surface of the first electrode 211.

In an embodiment, the first electrode 211 functions as the positive electrode, and the first active material layer 211a may include a positive electrode active material.

The positive electrode active material may be a compound (lithiated intercalation compound) capable of reversibly intercalating and deintercalating lithium. In an embodiment, at least one composite oxide of lithium and a metal selected from cobalt, manganese, nickel, iron, and a combination thereof may be used.

As an example, the positive electrode active material may include at least one selected from lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0<x<1, 0<y<1, 0<z<1, and x+y+z=1 may be satisfied. The positive electrode active material may include only one selected from LFP, LMFP, and NCM or may include two or all selected from LFP, LMFP, and NCM.

The first active material layer 211a may further include a positive electrode conductive material.

The positive electrode conductive material may impart conductivity to the first active material layer 211a, and any suitable material may be used as the positive electrode conductive material as long as the material does not cause chemical changes and is electrically conductive. Examples of the positive electrode conductive material may include a carbon-based material, such as natural graphite, artificial graphite, carbon black, acetylene black, Ketjen black, carbon fiber, carbon nanofibers, or carbon nanotubes; a metal-based material in the form of a metal powder or metal fiber which contains copper, nickel, aluminum, silver, or the like; a conductive polymer, such as a polyphenylene derivative; or a mixture thereof.

The first active material layer 211a may further include a positive electrode binder.

The positive electrode binder may attach the particles constituting the positive electrode active material properly to each other and also attach the positive electrode active material properly to the first electrode 211.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene (PE), polypropylene (PP), polyamideimide, polyimide, or a combination thereof.

The aqueous binder may be selected from styrene-butadiene rubber, (meth)acrylated styrene-butadiene rubber, (meth)acrylonitrile-butadiene rubber, (meth) acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, phenol resin, an epoxy resin, polyvinyl alcohol, and a combination thereof.

If the aqueous binder is used as the positive electrode binder, the aqueous binder may further include a cellulose-based compound capable of imparting viscosity. As the cellulose-based compound, one or more types of carboxymethyl cellulose, hydroxypropylmethyl cellulose, methyl cellulose, and an alkali metal salt thereof may be mixed and used. In an embodiment, as the alkali metal, Na, K, or Li may be used.

The dry binder may include a polymer material capable of being fiberized, such as polytetrafluoroethylene, polyvinylidene fluoride, a polyvinylidene fluoride-hexafluoropropylene copolymer, polyethylene oxide, or a combination thereof.

The first electrode 211 may include a first uncoated portion 211b which is not coated with the first active material layer 211a. The first uncoated portion 211b according to an embodiment may be disposed at an end area of the first electrode 211 facing the second direction. However, the first uncoated portion 211b is not limited to such a form and, in an embodiment, may be formed at an entire edge area of the first electrode 211.

In an embodiment, the second electrode 212 may function as a negative electrode of the electrode assembly 210.

The second electrode 212 according to an embodiment may be formed to have a form of foil including a metal material, such as copper, a copper alloy, nickel, or a nickel alloy. Both, or opposite, surfaces of the second electrode 212 may be disposed to be perpendicular to the first direction. A type, size, and shape of the second electrode 212 are not particularly limited as long as the first electrode 211 does not cause chemical changes in a secondary battery and is conductive. A cross-sectional shape of the second electrode 212 may have any of various shapes in addition to a rectangular shape, as shown in FIG. 4.

The plurality of second electrodes 212 may be provided. The plurality of second electrodes 212 may be arranged in the first direction. The plurality of first electrodes 211 and the plurality of second electrodes 212 may be alternately disposed in the first direction.

The second electrode 212 may include a second active material layer 212a and a second uncoated portion 212b.

The second active material layer 212a may be provided in a form applied on at least a portion of the second electrode 212. The second active material layer 212a may be applied on both, or opposite, surfaces of the second electrode 212 or may be applied on only one surface of the second electrode 212.

In an embodiment, the second electrode 212 functions as the negative electrode, and the second active material layer 212a may include a negative electrode active material.

The negative electrode active material may include a material capable of reversibly intercalating/deintercalating lithium ions, a lithium metal, a lithium metal alloy, a material capable of doping and undoping lithium, or a transition metal oxide.

The material capable of reversibly intercalating/deintercalating lithium ions may include a carbon-based negative electrode active material, such as crystalline carbon, amorphous carbon, or a combination thereof. Examples of the crystalline carbon may include graphite, such as natural graphite or artificial graphite in an amorphous, plate-like, flake-like, spherical, or fiber-like form. Examples of the amorphous carbon may include soft carbon, hard carbon, mesophase pitch carbide, or calcined coke.

In an embodiment, the lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

As the material capable of doping and undoping lithium, a Si-based negative electrode active material or a Sn-based negative electrode active material may be used. The Si-based negative electrode active material may be silicon, a silicon-carbon composite, SiOₓ (0<x≤2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles and amorphous carbon with which surfaces of the silicon particles are coated. For example, the silicon-carbon composite may include a secondary particle (core) formed by bonding primary silicon particles and an amorphous carbon coating layer (shell) located on a surface of the secondary particle. The amorphous carbon may also be located between the primary silicon particles, and, thus, for example, the primary silicon particles may be coated with amorphous carbon. The secondary particles may be dispersed and present in an amorphous carbon matrix.

The silicon-carbon composite may further include crystalline carbon. For example, the silicon-carbon composite may include a core containing crystalline carbon and silicon particles and an amorphous carbon coating layer located on a surface of the core.

The Si-based negative electrode active material or Sn-based negative electrode active material may be used after being mixed with a carbon-based negative electrode active material.

The second active material layer 212a may further include a negative electrode conductive material and a negative electrode binder.

The negative electrode conductive material may impart conductivity to the second active material layer 212a, and any suitable material may be used as the positive electrode conductive material as long as the material does not cause chemical changes and is electrically conductive. Examples of the negative electrode conductive material may include a carbon-based material, such as natural graphite, artificial graphite, carbon black, acetylene black, Ketjen black, carbon fiber, carbon nanofibers, or carbon nanotubes; a metal-based material in the form of a metal powder or metal fiber which contains copper, nickel, aluminum, silver, or the like; a conductive polymer, such as a polyphenylene derivative; or a mixture thereof.

The negative electrode binder may attach particles constituting the negative electrode active material properly to each other and may also attach the negative electrode active material properly to the second electrode 212.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, PE, PP, polyamideimide, polyimide, or a combination thereof.

The aqueous binder may be selected from styrene-butadiene rubber, (meth)acrylated styrene-butadiene rubber, (meth)acrylonitrile-butadiene rubber, (meth) acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, phenol resin, an epoxy resin, polyvinyl alcohol, and a combination thereof.

If the aqueous binder is used as the negative electrode binder, the aqueous binder may further include a cellulose-based compound capable of imparting viscosity. As the cellulose-based compound, one or more types of carboxymethyl cellulose, hydroxypropylmethyl cellulose, methyl cellulose, and an alkali metal salt thereof may be mixed and used. In an embodiment, as the alkali metal, Na, K, or Li may be used.

The dry binder may include a polymer material capable of being fiberized, such as polytetrafluoroethylene, polyvinylidene fluoride, a polyvinylidene fluoride-hexafluoropropylene copolymer, polyethylene oxide, or a combination thereof.

The second electrode 212 may include the second uncoated portion 212b which is not coated with the second active material layer 212a. The second uncoated portion 212b according to an embodiment may be disposed at an end area of the second electrode 212. However, the second uncoated portion 212b is not limited to such a form and, in an embodiment, may be formed at the entire edge area of the second electrode 212.

The separator 213 may be disposed between the first electrode 211 and the second electrode 212. The separator 213 may prevent or substantially prevent a short circuit between the first electrode 211 and the second electrode 212 while allowing lithium ions to move between the first electrode 211 and the second electrode 212. In an embodiment, the separator 213 may be disposed to entirely surround a surface area of the electrode assembly 210. Accordingly, the separator 213 may prevent or substantially prevent the first electrode 211 and the second electrode 212 from being directly exposed to the outside of the electrode assembly 210.

In an embodiment, as the separator 213, PE, PP, polyvinylidene fluoride, or a multilayer thereof having two or more layers may be used, and a mixed multilayer such as a PE/PP double-layered separator, a PE/PP/PE triple-layered separator, or a PP/PE/PP triple-layered separator may be used.

The separator 213 may include a porous substrate and a coating layer which includes an organic material, an inorganic material, or a combination thereof and is located on one surface or both, or opposite, surfaces of the porous substrate.

In an embodiment, the porous substrate may be a polymer film formed of any one polymer selected from polyolefin, such as PE or PP, polyester, such as polyethylene terephthalate (PET) or polybutylene terephthalate, polyacetal, polyamide, polyimide, polycarbonate, polyether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more types thereof.

The organic material may include a polyvinylidene fluoride-based polymer or a (meth)acrylic-based polymer.

In an embodiment, the inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic material and the inorganic material may be mixed and present in one coating layer or may be present in a form in which a coating layer including an organic material and a coating layer including an inorganic material are stacked.

The electrode assembly 210 according to an embodiment may further include a first tab 214 and a second tab 215.

The first tab 214 may be connected to the first electrode 211.

The first tab 214 according to an embodiment may have a form of a foil extending from the first uncoated portion 211b of the first electrode 211 in the second direction. In an embodiment, the first tab 214 may have a generally rectangular shape. However, the shape of the first tab 214 is not limited thereto and may have any of various shapes.

In an embodiment, the first tab 214 may be formed integrally with the first electrode 211. For example, the first tab 214 may be a remaining area of the first uncoated portion 211b that remains after a portion of the first uncoated portion 211b is cut or removed through notching processing or the like. In another embodiment, the first tab 214 may be manufactured separately from the first electrode 211 and then connected to the first uncoated portion 211b through welding or the like. In an embodiment, a material of the first tab 214 may be the same as a material of the first electrode 211.

In an embodiment, a plurality of first tabs 214 may be provided. The first tabs 214 may individually extend from the first uncoated portions 211b of different first electrodes 211. The adjacent first tabs 214 may be disposed to face each other in the first direction. That is, the plurality of first tabs 214 may be arranged in the first direction. The adjacent first tabs 214 may be disposed parallel to each other. The adjacent first tabs 214 may be in contact with each other or may be spaced apart from each other due to a thickness of the separator 213.

The plurality of first tabs 214 may be provided in each first electrode 211. As an example, a pair of first tabs 214 may be formed in each first electrode 211. The pair of first tabs 214 formed in each first electrode 211 may be arranged in the third direction.

The second tab 215 may be connected to the second electrode 212.

The second tab 215 according to an embodiment may have a form of a foil extending from the second uncoated portion 212b of the second electrode 212 in a direction parallel to the second direction. In an embodiment, extending directions of the first tab 214 and the second tab 215 may be opposite directions. In an embodiment, the second tab 215 may have a generally rectangular shape. However, the shape of the second tab 215 is not limited thereto and may have any of various shapes.

In an embodiment, the second tab 215 may be formed integrally with the second electrode 212. For example, the second tab 215 may be a remaining area of the second uncoated portion 212b that remains after a portion of the second uncoated portion 212b is cut or removed through notching processing or the like. In another embodiment, the second tab 215 may be manufactured separately from the second electrode 212 and then connected to the second uncoated portion 212b through welding or the like. In an embodiment, a material of the second tab 215 may be the same as a material of the second electrode 212.

In an embodiment, a plurality of second tabs 215 may be provided. The second tabs 215 may individually extend from the second uncoated portions 212b of different second electrodes 212. The adjacent second tabs 215 may be disposed to face each other in the first direction. That is, the plurality of second tabs 215 may be arranged in the first direction. The adjacent second tabs 215 may be disposed parallel to each other. The adjacent second tabs 215 may be in contact with each other or may be spaced apart from each other by a thickness of the separator 213.

The plurality of second tabs 215 may be provided in each second electrode 212. As an example, a pair of second tabs 215 may be formed in each second electrode 212. The pair of second tabs 215 formed in each second electrode 212 may be arranged in the third direction.

The case 220 may form a general exterior of the secondary battery 200 and may accommodate the electrode assembly 210. The case 220 may include a conductive metal material, such as aluminum, an aluminum alloy, or nickel-plated steel.

The case 220 according to an embodiment may include a bottom portion 221, a first side portion 222, and a second side portion 223.

The bottom portion 221 may form a lower exterior of the case 220. In an embodiment, the bottom portion 221 may have a rectangular plate shape. The bottom portion 221 may be located to face a cooling plate 130. The bottom portion 221 may be disposed to face the cooling plate 130 in the third direction.

The first side portion 222 may extend from the bottom portion 221 and may form a portion of a side exterior of the case 220.

In an embodiment, the first side portion 222 may have a rectangular plate shape that is bent at both, or opposite, longitudinal ends of the bottom portion 221 and extends in the third direction. The first side portion 222 may be orthogonal to the second direction.

A pair of first side portions 222 may be provided. The pair of first side portions 222 may be disposed to be spaced apart from and face each other in the second direction. The pair of first side portions 222 may be disposed parallel to each other.

The second side portion 223 may be bent and extended from the bottom portion 221 and may form a remaining portion of the side exterior of the case 220.

The second side portion 223 may have a rectangular plate shape extending from the bottom portion 221 in the third direction. The second side portion 223 may be orthogonal to the first side portion 222. As an example, the second side portion 223 may be disposed to be orthogonal to the first direction.

A lower end portion of the second side portion 223 may be connected to an edge of the bottom portion 221 extending in the second direction. An area of the second side portion 223 may be greater than an area of the first side portion 222.

A pair of second side portions 223 may be provided. The pair of second side portions 223 may be disposed to be spaced by an interval (e.g., a predetermined interval) apart from and face each other in the first direction. The pair of second side portions 223 may be disposed parallel to each other. Accordingly, the case 220 according to an embodiment may have a rectangular parallelepiped shape with an open upper end portion.

The cap plate 230 may be coupled to the case 220 and may seal the case 220.

The cap plate 230 may be formed to have a flat plate shape. The cap plate 230 may be disposed to face the case 220 in the third direction. As an example, a lower surface of the cap plate 230 may be disposed to face an open upper surface of the case 220. An upper surface of the cap plate 230 may be disposed to face a lower surface of a cover plate 140. The cap plate 230 may be disposed parallel to the bottom portion 221 of the case 220.

The cap plate 230 may be mounted on upper end portions of the second side portion 223 and the first side portion 222. In a secondary battery according to another embodiment of the present disclosure, the cap plate 230 may be fitted to an upper end portion of the case 220, and a peripheral surface of the cap plate 230 may be in contact with inner surfaces of the second side portion 223 and the first side portion 222. The cap plate 230 may be coupled to the upper end portions of the second side portion 223 and the first side portion 222 through any of various types of coupling methods including welding, bolting, fitting, and the like.

The terminal 240 may be coupled to the cap plate 230 and may protrude outward from the cap plate 230. The terminal 240 may be electrically connected to the electrode assembly 210.

The terminal 240 according to an embodiment may pass through the cap plate 230 in the third direction. An upper end portion of the terminal 240 may protrude outward from the case 220, and a lower end portion of the terminal 240 may protrude to the inside of the case 220. A specific shape of the terminal 240 is not limited to a shape shown in FIGS. 3 and 4 and may have any of various shapes.

The terminal 240 may be formed of an electrically conductive material, such as aluminum, nickel, or copper.

A pair of terminals 240 may be provided. The pair of terminals 240 may be disposed on the cap plate 230 to be spaced by an interval (e.g., a predetermined interval) apart from each other in the second direction. The pair of terminals 240 may be individually connected to the first electrode 211 and the second electrode 212 of the electrode assembly 210. Accordingly, the pair of terminals 240 may respectively function as one of a positive terminal and a negative terminal of the secondary battery 200.

For example, one terminal 240 of the pair of terminals 240 may be connected to the first tab 214. In an embodiment, one terminal 240 of the pair of terminals 240 may be indirectly connected to the first tab 214 through a current collector 241 welded to the first tab 214. In another embodiment, one terminal 240 may be directly connected to the first tab 214.

In addition, another terminal 410 of the pair of terminals 240 may be connected to the second tab 215. In an embodiment, the another terminal 240 of the pair of terminals 240 may be indirectly connected to the second tab 215 through the current collector 241 welded to the second tab 215. In another embodiment, the another terminal 240 may be directly connected to the second tab 215.

An insulator 260 may be installed between the electrode assembly 210 and the cap plate 230. A pair of insulators 260 may be provided. The pair of insulators 260 may be spaced apart from each other in the second direction between the electrode assembly 210 and the cap plate 230. The pair of insulators 260 may be disposed to individually surround different terminals 240. The insulator 260 may be formed of an insulating material, such as PE, PP, PET, or rubber.

The cell vent 250 may be provided in the cap plate 230 and may be opened or closed in response to an internal pressure of the case 220. The cell vent 250 may provide a discharge path for gases, flames, smoke, or the like which are generated inside the case 220 if the internal pressure of the case 220 increases to a certain pressure (e.g., a set pressure) or more due to an overcurrent, thermal runaway, or the like. The cell vent 250 may be located between the pair of terminals 240. A longitudinal direction of the cell vent 250 to be described below may be a direction parallel to the second direction, and a width direction of the cell vent 250 may be a direction parallel to the first direction.

The vent 250 may include a vent hole 251 and a vent plate 252.

The vent hole 251 may be formed to have a shape of a hole passing through the cap plate 230 in the third direction. A lower side of the vent hole 251 may be connected to the internal space 225 of the case 220. An upper side of the vent hole 251 may be connected to an external space of the cap plate 230.

A cross-sectional shape of the vent hole 251 may have any of various shapes, such as any of an oval shape, a circular shape, and a polygonal shape. An area of the cell vent 250, a length of the cell vent 250, and a width of the cell vent 250 to be described below may be the same as an area of the vent hole 251, a length of the vent hole 251, and a width of the vent hole 251. In an embodiment, a ratio of the area of the vent hole 251, that is, the cell vent 250, to an area of the upper surface of the cap plate 230 may be in a range of 0.05 to 0.1.

The vent plate 252 may be installed in the cap plate 230 to close the vent hole 251. The vent plate 252 may be opened or closed in response to a change in pressure of the internal space 225 of the case 220. That is, the vent plate 252 may seal the case 220 by maintaining a closed state during normal operation of the secondary battery 200.

The vent plate 252 may be opened as the internal pressure of the case 220 increases to a certain amount (e.g., a set amount) due to overcharging of the secondary battery 200 or an outbreak of fire and may discharge flames, gases, smoke, or the like generated from the inside of the case 220 to the outside of the case 220.

The vent plate 252 according to an embodiment may be formed to have a flat plate shape. In an embodiment, a thickness of the vent plate 252 may be smaller than a thickness of the cap plate 230. An upper surface of the vent plate 252 may be coupled to a lower surface of the cap plate 230 through any of various types of coupling methods including welding, bolting, fitting, and the like. In an embodiment, the vent plate 252 may be inserted into the vent hole 251, and a peripheral surface of the vent plate 252 may be coupled to an inner surface of the vent hole 251.

Referring again to FIGS. 1 and 2, the plurality of busbars 30 are located inside the housing 100 and may electrically connect the plurality of secondary batteries 200. The busbar 30 electrically connects a terminal 240 of the pair of terminals 240 of one secondary battery 200 among the plurality of secondary batteries 200 to a terminal 240 of the pair of terminals 240 of another secondary battery 200 among the plurality of secondary batteries 200. For example, the busbar 30 and the terminal 240 may be coupled through welding.

The number of terminals 240 included in the battery module 10 is twice the number of secondary batteries 200. A plurality of terminals 240 included in the battery module 10 may be arranged in a pair of columns in the first direction. The number of the cell vents 250 may be equal to the number of the plurality of secondary batteries 200. The number of the cover vent holes 147 may be equal to the number of the plurality of secondary batteries 200.

Among the pair of columns of the terminals 240, a first column and a second column are spaced apart from each other in the second direction, the first column of the terminals 240 may be disposed at one side of the battery module 10, and the second column of the terminals 240 may be arranged at another side of the battery module 10.

The plurality of busbars 30 may also be arranged in a pair of columns, which extend in the first direction and are spaced apart from each other in the second direction, to correspond to the plurality of terminals 240 arranged in the pair of columns. A first column of the pair of columns of the busbars 30 may be located to overlap the first column of the pair of columns of the terminal 240 in the third direction, and a second column of the columns of the busbars 30 may be located to overlap the second column of the columns of the terminals 240 in the third direction.

In an embodiment, the battery module 10 may further include an insulating film 40 and a detection circuit unit 50. The insulating film 40 may be attached to a surface of the busbar 30. For example, the insulating film 40 may be attached to a lower surface of the busbar 30 that is welded to the terminal 240.

The insulating film 40 is attached to the busbar 30 by avoiding an area welded to the terminal 240 in order not to interfere with welding between the busbar 30 and the terminal 240. In an embodiment, for example, a plurality of through-holes 43 may be formed in a central portion of the insulating film 40 to allow direct contact between the busbar 30 and the terminal 240.

A pair of insulating films 40 may be provided to correspond to a pair of columns of the busbars 30. Each insulating film 40 may extend in the first direction.

The detection circuit unit 50 measures a state of the plurality of secondary batteries 200 during charging/discharging of the battery module 10. The detection circuit unit 50 may include a sensor and a flexible circuit. The sensor may be, for example, a voltage sensor that measures a voltage of the plurality of secondary batteries 200 or a temperature sensor that measures a temperature of the plurality of secondary batteries 200. The flexible circuit transmits a signal generated by the sensor to a battery module controller (not shown) that controls the battery module 10. The flexible circuit may electrically connect the sensor to the battery module controller.

Referring to FIGS. 1, 2, and 6 to 12, the cover plate 140 has a plurality of cover vent holes 147 corresponding one-to-one to a plurality of cell vents 250 included in the battery module 10.

The plurality of cover vent holes 147 may be arranged in one column in the first direction between a pair of columns of the plurality of terminals 240. The plurality of cell vents 250 and the plurality of cover vent holes 147 may be located to overlap each other in the third direction. In an embodiment, the plurality of cell vents 250 and the plurality of cover vent holes 147 may be arranged in one column in the first direction between the pair of columns of the plurality of terminals 240.

The cover plate 140 may further include a cell vent cover 146, a pair of terminal covers 141, a pair of side coupling portions 155, and a plurality of vent guide protrusions 150.

The plurality of cover vent holes 147 may be formed in the cell vent cover 146. The cell vent cover 146 may extend in the first direction. The pair of terminal covers 141 are located to be spaced apart from each other with the cell vent cover 146 interposed therebetween.

The pair of terminal covers 141 may overlap the plurality of terminals 240 in the third direction. The pair of terminal covers 141 may each extend in the first direction. The pair of terminal covers 141 may be spaced further apart from the cap plate 230 than the cell vent cover 146 in the third direction.

The vent guide protrusion 150 may protrude from the cell vent cover 146 toward the cap plate 230 in the third direction to be in contact with a periphery of the vent 250. In an embodiment, a lower end of the vent guide protrusion 150 may be in contact with the cap plate 230 around the vent hole 251.

The vent guide protrusion 150 may have a cross-section with a closed curve shape and may protrude from a periphery of the cover vent hole 147 to be in contact with the periphery of the cell vent 250. In an embodiment, a number of vent guide protrusions 150 may be equal to a number of cover vent holes 147 to have a one-to-one correspondence. A planar shape of the vent hole 251, the cover vent hole 147, and the vent guide protrusion 150 may be, for example, an oval shape.

The cover plate 140 may further include an intermediate inclination plate 153 and the side coupling portion 155. The intermediate inclination plate 153 may be located between the cell vent cover 146 and the terminal cover 141 and may connect the cell vent cover 146 to the terminal cover 141.

The intermediate inclination plate 153 may be inclined (e.g., gradually inclined) from the cell vent cover 146 to the terminal cover 141 in a direction away from the cap plate 230. A pair of intermediate inclination plates 153 may be provided. The pair of intermediate inclination plates 153 may be located to be spaced apart from each other with the cell vent cover 146 interposed therebetween. The pair of intermediate inclination plates 153 may extend in the first direction.

The side coupling portion 155 may be located to be spaced further apart from the cell vent cover 146 than the terminal cover 141 in the second direction. The side coupling portion 155 may be connected to the terminal cover 141. A pair of side coupling portions 155 may be provided. The pair of side coupling portions 155 may be located at both, or opposite, end portions of the cover plate 140 in the width direction. The pair of side coupling portions 155 may extend in the first direction.

The cover plate 140 may be formed of a metal material with an excellent thermal conductivity property. For example, the cover plate 140 may be formed of aluminum or an aluminum alloy.

The heat conductor 60 is interposed between the cover plate 140 and the plurality of cap plates 230 of the plurality of secondary batteries 200 inside the housing 100. In an embodiment, the heat conductor 60 may include a thermal conductive adhesive that fills a space between the cap plate 230 and the cover plate 140 and is in contact with the cap plate 230, the terminal 240, the busbar 30, and the cover plate 140.

For example, a liquid thermal conductive adhesive may be injected into a space defined by the plurality of cap plates 230, the terminal cover 141, the intermediate inclination plate 153, and the side coupling portion 155 and cured to form the heat conductor 60.

When the thermal conductive adhesive is cured, as shown in FIG. 4, the plurality of terminals 240, the plurality of busbars 30, the insulating film 40, and the detection circuit unit 50 may be embedded in the heat conductor 60.

Since the thermal conductive adhesive before being cured is a liquid but has high viscosity and an insulation sheet 290 is interposed between the second side portions 223 of adjacent secondary batteries 200, the thermal conductive adhesive may not flow down along the second side portions 223.

In addition, the thermal conductive adhesive before being cured may be blocked by the vent guide protrusion 150 and thus may not flow into the cell vent 250. Accordingly, a closure or malfunction of the cell vent 250 can be prevented or substantially prevented.

In another embodiment, a cover plate included in a battery module may not include a vent guide protrusion. Even though the vent guide protrusion is not included, a gap between the cell vent cover 146 and the cap plate 230 is narrow, and a path of the thermal conductive adhesive directed to the cell vent cover 146 may narrow (e.g., gradually narrow) due to the intermediate inclination plate 153, and the thermal conductive adhesive may be cured without reaching the cell vent cover 146.

In addition, even though the vent guide protrusion is not present, since the cell vent 250 and the cover vent hole 147 are located to face each other in the third direction, flammable materials and gases released if the vent plate 252 ruptures may be released to the outside of the battery module 10 through the cover vent hole 147.

A heat conductor included in a battery module according to another embodiment of the present disclosure may include a thermal conductive sheet as well as a thermal conductive adhesive or may include only a thermal conductive sheet excluding a thermal conductive adhesive.

The housing 100 may further include a pair of end plates 101, a pair of side plates 110, and the cooling plate 130.

The pair of end plates 101 may be located to be spaced apart from each other in the first direction such that the plurality of secondary batteries 200 is interposed therebetween. The pair of side plates 110 may be located to be spaced apart from each other in the second direction such that the plurality of secondary batteries 200 is interposed therebetween. The pair of side plates 110 may be coupled to the pair of end plates 101.

In an embodiment, the pair of end plates 101 and the pair of side plates 110 may be formed of a metal material having an excellent thermal conductivity property. For example, the end plates 101 and the side plates 110 may be formed of aluminum or an aluminum alloy.

The side plate 110 may include a side shield portion 111 extending in the first direction, and a cover coupling portion 120 connected to a side of the side shield portion 111 and coupled to the cover plate 140. The side coupling portion 155 of the cover plate 140 may be coupled to the cover coupling portion 120.

Both, or opposite, end portions 113 of the side shield portion 111 in a longitudinal direction may be connected to the pair of end plates 101. The end plate 101 may include an end shield portion 102 that covers the secondary battery 200 located at a frontmost side or a rearmost side in the first direction among the plurality of secondary batteries 200.

Both, or opposite, end portions 104 of the end shield portion 102 in the second direction may be coupled to the pair of side plates 110. For example, an end portion 104 of the end shield portion 102 and an end portion 113 of the side shield portion 111 may be connected through welding. According to another embodiment of the present disclosure, the end plate 101 and the side plate 110 may be coupled through, for example, bolting or riveting.

The cover coupling portion 120 may be located above the side shield portion 111 to be connected to the side shield portion 111 in the third direction. The cover coupling portion 120 may include a side inclination surface 121, a side blocking wall 123, and a spare space 125.

The side inclination surface 121 may be inclined in a direction away from the cap plate 230 in the third direction as a distance to the terminal 240 is increased in the second direction.

The side coupling portion 155 of the cover plate 140 may include a first side inclination plate 156 and a second side inclination plate 158. To be in surface contact with the side inclination surface 121 of the side plate 110, the first side inclination plate 156 may be inclined in a direction away from the cap plate 230 in the third direction as a distance to the terminal cover 141 is increased in the second direction.

The second side inclination plate 158 may be located between the terminal cover 141 and the first side inclination plate 156 to connect the terminal cover 141 to the first side inclination plate 156. The second side inclination plate 158 may be inclined in a direction toward the cap plate 230 in the third direction as a distance to the terminal cover 141 is increased in the second direction.

The first side inclination plate 156 and the second side inclination plate 158 may extend in the first direction.

In an embodiment, a shape of a vertical cross-section of the side coupling portion 155 including the first side inclination plate 156 and the second side inclination plate 158 may be a "V" shape, as shown in FIG. 10.

The side plate 110 and the cover plate 140 may be coupled by welding the first side inclination plate 156 and the side inclination surface 121. Even if a welding bead is formed to protrude from the first side inclination plate 156 during a process of welding the first side inclination plate 156 and the side inclination surface 121, the welding bead is formed in a groove of the V-shaped side coupling portion 155, and a height of the battery module 10 in the third direction may not increase.

The side blocking wall 123 may have a side in contact with the cap plate 230 in the third direction and another side in contact with the second side inclination plate 158. The side blocking wall 123 may extend in the first direction. The side blocking wall 123 may be formed to be spaced apart from the side inclination surface 121.

In an embodiment, a liquid thermal conductive adhesive injected into a space between the plurality of cap plates 230 and the terminal cover 141 is blocked by the side blocking wall 123, and the liquid thermal conductive adhesive may not permeate the second side inclination plate 158 and may be cured by the heat conductor 60.

The spare space 125 may be provided between the blocking wall 123 and the side inclination surface 121 in the second direction. A fluidic material leaking toward the cover coupling portion 120 through a gap between the side blocking wall 123 and the second side inclination plate 158 may be accommodated in the spare space 125.

For example, even if a portion of a liquid thermal conductive adhesive injected into the space between the plurality of cap plates 230 and the terminal cover 141 leaks toward the cover coupling portion 120 through the gap between the side blocking wall 123 and the second side inclination plate 158, the liquid thermal conductive adhesive may be accommodated and cured in the spare space 125. Accordingly, an allowable error of an amount of a thermal conductive adhesive injected into the space between the terminal cover 141 and the plurality of cap plates 230 may be expanded, and assembly defects of the battery module 10 may be reduced.

The end plate 101 may further include an end blocking wall 106 that protrudes from the end shield portion 102 in the third direction and is coupled to the terminal cover 141. For example, the end blocking wall 106 may protrude from an upper end portion of the end shield portion 102 in the third direction and may extend in the second direction. The end plate 101 may include a pair of end blocking walls 106 corresponding to the pair of terminal covers 141.

For example, as shown in FIG. 12, an end portion 144 of the terminal cover 141 may cover the end blocking wall 106 in the first direction so as to be in contact with an upper end of the end blocking wall 106. In an embodiment, the end portion 144 of the terminal cover 141 and the upper end of the end blocking wall 106 may be coupled through welding. Accordingly, a liquid thermal conductive adhesive injected into the space between the plurality of cap plates 230 and the terminal cover 141 may not leak out of the battery module 10 past the end plate 101.

The cooling plate 130 may be located below the plurality of secondary batteries 200 in the third direction. The cooling plate 130 may be located to be spaced apart from the cover plate 140 in the third direction, and the plurality of secondary batteries 200 may be interposed between the cover plate 140 and the cooling plate 130.

The cooling plate 130 may be in contact with the bottom portion 221 of the case 220 of the plurality of secondary batteries 200. In an embodiment, a coolant may pass through the cooling plate 130 to absorb heat from the secondary batteries 200.

In an embodiment, the cooling plate 130 may be in contact with the pair of end plates 101 and the pair of side plates 110. The pair of end plates 101 and the pair of side plates 110 are coupled to the cover plate 140, and the cover plate 140 is in contact with the heat conductor 60. The terminal 240 and the cap plate 230 of each of the secondary batteries 200, the busbars 30, and the detection circuit unit 50 are embedded in the heat conductor 60 so as to be in contact with the heat conductor 60.

Accordingly, when the battery module 10 is charged/discharged, heat of the terminal 240, the cap plate 230, the busbar 30, and the detection circuit unit 50, which generate more heat than other portions the secondary battery 200, may pass through the heat conductor 60, the cover plate 140, the end plate 101, and the side plate 110 to be quickly dissipated through the cooling plate 130. Therefore, overheating of the battery module 10 can be prevented or substantially prevented, and the battery module 10 can be charged or discharged safely and quickly.

According to one or more embodiments of the present disclosure, heat of a terminal and a portion therearound, which become easily overheated during charging/discharging, can be easily discharged to a housing including a cover plate through a heat conductor, thereby improving the heat dissipation performance of a battery module. Accordingly, the charging speed of a battery module can be increased, charging can be performed more safely, and, even if thermal runaway occurs in some secondary batteries among secondary batteries included in the battery module, the propagation of the thermal runaway to adjacent secondary batteries can be delayed and suppressed.

According to one or more embodiments of the present disclosure, a busbar holder, which is formed of an insulating material and used to support a plurality of busbars in a battery module, is removed, and the heat dissipation performance of a battery module can be improved, and manufacturing costs of the battery module can be reduced.

According to one or more embodiments of the present disclosure, a cover plate can be formed of a thermal conductive material, such as a metal material, and the rigidity of a housing can therefore be improved.

However, aspects and features of the present invention are not limited to those described above and other aspects and features not mentioned will be clearly understood by those skilled in the art from the above detailed description.

## Claims

1. A battery module (10) comprising:
a housing (100) comprising a cover plate (140) having thermal conductivity;
a plurality of secondary batteries (200) accommodated in the housing (100) and each comprising an electrode assembly (210), a case (220) configured to accommodate the electrode assembly (210), a cap plate (230) which seals the case (220) and faces the cover plate (140), and a pair of terminals (240) installed on the cap plate (230);
a plurality of busbars (30) accommodated in the housing (100) and configured to electrically connect the plurality of the secondary batteries (200); and
a heat conductor (60) between the cap plates (230) of the plurality of the secondary batteries (200) and the cover plate (140).

2. The battery module (10) as claimed in claim 1, wherein the heat conductor (60) comprises a thermal conductive adhesive which fills a space between the cap plate (230) and the cover plate (140) and is in contact with the cap plate (230), the terminal (240), the busbars (30), and the cover plate (140).

3. The battery module (10) as claimed in claim 1 or 2, wherein each of the secondary batteries (200) further comprises a cell vent (250) between the pair of terminals (240) in the cap plate (230), and
the cover plate (140) comprises cover vent holes (147) corresponding to the cell vents (250).

4. The battery module (10) as claimed in any of claims 1 to 3, wherein, in the battery module (10),
a number of the terminals (240) is twice a number of the plurality of secondary batteries (200),
a number of the cell vents (250) is equal to the number of the plurality of secondary batteries (200), and
a number of the cover vent holes (147) is equal to the number of the plurality of secondary batteries (200).

5. The battery module (10) as claimed in claim 3 or **4,** wherein the secondary batteries (200) are arranged in one column in a first direction,
the plurality of terminals (240) are arranged in a pair of columns in the first direction at a first side and a second side of the battery module (10) in a second direction orthogonal to the first direction, and
the cell vents (250) and the cover vent holes (147) are each arranged in one column in the first direction between the pair of columns of the plurality of terminals (240).

6. The battery module (10) as claimed in any of claims 3 to 5, wherein the cell vents (250) and the cover vent holes (147) are located to overlap each other in a third direction orthogonal to each of the first direction and the second direction.

7. The battery module (10) as claimed in any of claims 3 to 6, wherein the cover plate (140) comprises:
a cell vent cover (146) in which the cover vent holes (147) are formed; and
a pair of terminal covers (141) which overlap the plurality of terminals (240) in the third direction and are located to be spaced apart from each other with the cell vent cover (146) therebetween.

8. The battery module (10) as claimed in claim 7, wherein the pair of terminal covers (141) are spaced further apart from the cap plate (230) than the cell vent cover (146) in the third direction.

9. The battery module (10) as claimed in claim 7, wherein the cover plate (140) further comprises vent guide protrusions (150) each protruding from the cell vent cover (146) to be in contact with a periphery of a cell vent (250) of the cell vents (250).

10. The battery module (10) as claimed in claim 7, wherein the housing (100) further comprises:
a pair of end plates (101) located to be spaced apart from each other in the first direction such that the plurality of the secondary batteries (200) is arranged therebetween; and
a pair of side plates (110) coupled to the pair of end plates (101) and located to be spaced apart from each other in the second direction such that the plurality of secondary batteries (200) is arranged therebetween.

11. The battery module (10) as claimed in claim 10, wherein each of the side plates (110) comprises a side shield portion (111) extending in the first direction and having opposite end portions (104, 113, 144) in the first direction coupled to the pair of end plates (101), and a cover coupling portion (120) connected to a side of the side shield portion (111) in the third direction and coupled to the cover plate (140), and
the cover plate (140) further comprises a side coupling portion (155) coupled to the cover coupling portion (120) and located to be spaced further apart from the cell vent cover (146) than the terminal cover (141) in the second direction.

12. The battery module (10) as claimed in claim 11, wherein the cover coupling portion (120) includes a side inclination surface (121) which is welded to the side coupling portion (155) and is inclined in a direction away from the cap plate (230) in the third direction as a distance to the terminal (240) is increased in the second direction.

13. The battery module (10) as claimed in claim 12, wherein the side coupling portion (155) comprises:
a first side inclination plate (156) which is inclined in the direction away from the cap plate (230) in the third direction as a distance to the terminal cover (141) is increased in the second direction so as to be in surface contact with the side inclination surface (121); and
a second side inclination plate (158) which is located between the terminal cover (141) and the first side inclination plate (156) to connect the terminal cover (141) to the first side inclination plate (156) and which is inclined in a direction toward the cap plate (230) in the third direction as the distance to the terminal cover (141) is increased in the second direction.

14. The battery module (10) as claimed in claim 13, wherein the cover coupling portion (120) further comprises a side blocking wall (123) having a side in contact with the cap plate (230) in the third direction and another side in contact with the second side inclination plate (158) and extending in the first direction.

15. The battery module (10) as claimed in claim 10, wherein the end plate (101) comprises:
an end shield portion (102) of which opposite end portions (104, 113, 144) in the second direction are coupled to the pair of side plates (110); and
an end blocking wall (106) protruding from the end shield portion (102) in the third direction and coupled to the terminal cover (141).
